(19) **Europäisches Patentamt / European Patent Office / Office européen des brevets**

(11) **EP 2 875 975 B1**

(12) **EUROPÄISCHE PATENTSCHRIFT**

(45) Veröffentlichungstag und Bekanntmachung des Hinweises auf die Patenterteilung:
**22.05.2019 Patentblatt 2019/21**

(51) Int Cl.:
**B60G 17/04** (2006.01)    **G05D 16/18** (2006.01)

(21) Anmeldenummer: **14194415.7**

(22) Anmeldetag: **22.11.2014**

(54) **Hydraulikschaltung und deren Verwendung**

Hydraulic circuit and use of same

Circuit hydraulique et son utilisation

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **22.11.2013 DE 102013112956**
                **27.01.2014 DE 102014100926**

(43) Veröffentlichungstag der Anmeldung:
**27.05.2015 Patentblatt 2015/22**

(73) Patentinhaber: **Weber-Hydraulik GmbH**
**74363 Güglingen (DE)**

(72) Erfinder:
- **Käsler, Richard**
 **53424 Remagen (DE)**
- **Zatrieb, Jacek**
 **74363 Güglingen (DE)**

(74) Vertreter: **Lemcke, Brommer & Partner**
**Patentanwälte Partnerschaft mbB**
**Siegfried-Kühn-Straße 4**
**76135 Karlsruhe (DE)**

(56) Entgegenhaltungen:
WO-A2-01/33307      DE-A1- 1 550 589
GB-A- 889 529      GB-A- 2 255 840
US-A1- 2003 140 975

## Beschreibung

## Technisches Gebiet

Die vorliegende Erfindung betrifft eine Hydraulikschaltung zur Druckregelung, insbesondere zur Druckminderung, zum Beispiel in einem L[oad-]S[ensing]-System oder Lastdruck-Melde-System, gemäß dem Oberbegriff des Anspruchs 1.

## Stand der Technik

Hydraulikschaltungen mit Druckregeleinrichtungen sind zum Beispiel in der DE 101 07 644 A1 und in der DE 197 19 076 A1 offenbart. Allerdings kann mit diesen bekannten Hydraulikschaltungen der Druck am Regeldruckanschluss nicht anwendungsgerecht geregelt werden; insbesondere ist bei diesen bekannten Hydraulikschaltungen der Regeldruck nicht in Abhängigkeit von einer weiteren Regelgröße, zum Beispiel in Abhängigkeit vom Druck am Referenzanschluss, regelbar.

In der Schrift DE 15 50 589 A1 wird ein hydraulisches Wegeventil beschrieben, bei dem ein federbelasteter Ventilkolben mittels eines Pilotdrucks zwischen zwei Schaltstellungen hin und her geschaltet werden kann. Eine Regelung eines Ausgangsdrucks ist bei dem dort gezeigten Ventil nicht möglich.

Die Schrift GB 889 529 A zeigte eine Ventilanordnung mit insgesamt 4 parallel geschalteten Hydraulikpumpen, bei der ein Ausgangsdruck unabhängig vom Fluidbedarf am Ausgang konstant gehalten und bei abnehmendem Fluidbedarf am Ausgang die Pumpen schrittweise zu einem Tank hin entlastet werden, um diese außer Last zu nehmen. Damit kann bei vorgegebenem Druck ein großer Bereich für eine Durchflussrate des Fluids abgedeckt werden. Eine Regelung des Ausgangsdrucks in Abhängigkeit einer weiteren Regelgröße erlaubt die Schaltung jedoch nicht.

## Darstellung der vorliegenden Erfindung: Aufgabe, Lösung, Vorteile

Ausgehend von den vorstehend dargelegten Nachteilen und Unzulänglichkeiten sowie unter Würdigung des umrissenen Stands der Technik liegt der vorliegenden Erfindung die Aufgabe zugrunde, eine Hydraulikschaltung gemäß dem Oberbegriff des Anspruchs 1 so auszubilden, dass der Druck am Regeldruckanschluss anwendungsgerecht geregelt werden kann; insbesondere soll der Regeldruck in Abhängigkeit von einer weiteren Regelgröße, zum Beispiel in Abhängigkeit vom Druck am Referenzanschluss, regelbar sein.

Diese Aufgabe wird bei einer Hydraulikschaltung gemäß dem Oberbegriff des Anspruchs 1 erfindungsgemäß durch deren kennzeichnende Merkmale gelöst; insbesondere wird hierdurch ein linearer Zusammenhang zwischen dem Regeldruck und dem Druck am Referenzanschluss ermöglicht.

Vorteilhafte Ausführungsformen und zweckmäßige Weiterbildungen der vorliegenden Erfindung sind in den abhängigen Ansprüchen gekennzeichnet.

Erfindungsgemäß wird also eine Hydraulikschaltung mit einem zur Regelung, insbesondere zur Minderung, des Drucks an einem Regeldruckanschluss vorgesehenen hydraulischen Druckregelventil vorgeschlagen, welches Druckregelventil

- mindestens ein bewegliches Stellglied, dessen Stirnflächen mit Druck beaufschlagbar sind,
- mindestens eine Druckfeder, die sich am Stellglied abstützt und gegen die die Druckkraft aus dem Druck $p_V$ am Regeldruckanschluss wirkt,
- eine über einen Hochdruckanschluss der Hydraulikschaltung an eine Hochdruckquelle angeschlossene erste Druckkammer,
- eine über einen Niederdruckanschluss der Hydraulikschaltung an eine Niederdruckquelle angeschlossene zweite Druckkammer und
- eine über den Regeldruckanschluss der Hydraulikschaltung an einen Verbraucher angeschlossene dritte Druckkammer

aufweist, wobei an einer der Stirnflächen des Stellglieds eine Einrichtung vorgesehen ist, die mit dem an mindestens einem Referenzdruckanschluss der Hydraulikschaltung herrschenden Druck beaufschlagbar ist und dass die mindestens eine aus dieser Druckbeaufschlagung resultierende Druckkraft auf das Stellglied übertragbar ist und gleich- oder gegengerichtet zu der auf das Stellglied wirkenden, sich aus der aus der Druckbeaufschlagung am Regeldruckanschluss ergebenden Kraft ist.

Gemäß einer bevorzugten Ausführungsform der vorliegenden Erfindung

- ist die Hochdruckquelle als mindestens eine Pumpe oder als mindestens ein Wegeventilblock ausgebildet und/oder
- ist die Niederdruckquelle als mindestens ein Tank ausgebildet und/oder
- ist der Verbraucher als mindestens ein Zylinder oder als mindestens eine Zylinderkammer ausgebildet.

Nach einer vorteilhaften Ausgestaltungsform der vorliegenden Erfindung

- ist die erste Druckkammer als Hochdruckkammer ausgebildet und/oder
- ist die zweite Druckkammer als Niederdruckkammer ausgebildet und/oder
- ist die dritte Druckkammer als Regeldruckkammer ausgebildet.

Gemäß einer zweckmäßigen Weiterbildung der vorliegenden Erfindung weist das Druckregelventil eine über einen Referenzdruckanschluss der Hydraulikschaltung an eine Referenzdruckquelle angeschlossene vierte Druckkammer, insbesondere Referenzdruckkammer, auf.

Nach einer bevorzugten Ausführungsform der vorliegenden Erfindung umfasst die Einrichtung eine Teilfläche der einen der Stirnflächen des Stellglieds des Druckregelventils, die von der anderen Teilfläche hydraulisch getrennt ist.

Gemäß einer vorteilhaften Ausgestaltungsform der vorliegenden Erfindung ist die Einrichtung als separates Stellelement ausgeführt, das sich auf einer der Stirnflächen des Stellglieds unter Einwirkung der Kraft aus dem Druck am Referenzdruckanschluss neben der Kraft $F_R$ einer der Einrichtung zugeordneten Feder abstützt.

Nach einer zweckmäßigen Weiterbildung der vorliegenden Erfindung sind die einzelnen Druckkammern voneinander schieberdichtend getrennt.

Gemäß einer bevorzugten Ausführungsform der vorliegenden Erfindung sind die einzelnen Druckkammern mittels mindestens eines unter Druckeinwirkung verformbaren Dichtelements, zum Beispiel aus Kautschuk, aus Polyurethan oder aus Polytetrafluorethylen, getrennt.

Nach einer vorteilhaften Ausgestaltungsform der vorliegenden Erfindung ist zwischen dem Hochdruckanschluss und dem Niederdruckanschluss eine, insbesondere als Druckkaskade oder als hydraulische Kaskade ausgebildete, mindestens zwei, insbesondere druckkompensierte, Blenden aufweisende Teilschaltung angeordnet.

Gemäß einer zweckmäßigen Weiterbildung der vorliegenden Erfindung ist auf der dem Hochdruckanschluss, insbesondere unter dem Niederdruckanschluss, zugewandten Seite der Teilschaltung ein Wegeventil, insbesondere Magnetventil, angeordnet.

Nach einer bevorzugten Ausführungsform der vorliegenden Erfindung weist das Wegeventil mindestens zwei Schaltzustände auf, wobei die Teilschaltung

- im ersten oder geschlossenen Schaltzustand des Wegeventils vom Hochdruckanschluss getrennt ist und
- im zweiten oder offenen Schaltzustand des Wegeventils mit dem Hochdruckanschluss verbunden ist.

Gemäß einer vorteilhaften Ausgestaltungsform der vorliegenden Erfindung wird das Wegeventil

- im ersten, insbesondere unbestromten, Schaltzustand durch die Kraft einer dem Wegeventil zugeordneten Feder in eine Sperrstellung überführt und
- im zweiten, insbesondere bestromten, Schaltzustand durch die gegen die Kraft der dem Wegeventil zugeordneten Feder wirkende Kraft eines Magneten in eine offene Stellung überführt.

Nach einer zweckmäßigen Weiterbildung der vorliegenden Erfindung ist

- die erste Druckkammer und/oder
- ein Referenzdruckanschluss, insbesondere über mindestens ein Rückschlagventil und/oder über mindestens ein Stromregelventil, und/oder
- ein Druckmeldeanschluss, insbesondere über mindestens ein Rückschlagventil,

an einen zwischen den Blenden liegenden Abschnitt der Teilschaltung angeschlossen.

Die vorliegende Erfindung eignet sich exemplarisch zum Einsatz in einem Federungssystem mit einer vordefinierten Abhängigkeit des Regeldrucks vom Druck am Referenzdruckanschluss, insbesondere mit einem linearen Zusammenhang zwischen dem Regeldruck und dem Druck am Referenzdruckanschluss.

Die vorliegende Erfindung betrifft schließlich die Verwendung mindestens einer Hydraulikschaltung gemäß der vorstehend dargelegten Art

- in einem L[oad-]S[ensing]-System oder Lastdruck-Melde-System und/oder
- in einem Federungssystem für eine der Achsen, insbesondere für die Vorderachse, eines Kraftfahrzeugs, zum Beispiel eines landwirtschaftlichen Schleppers.

**Kurze Beschreibung der Zeichnungen**

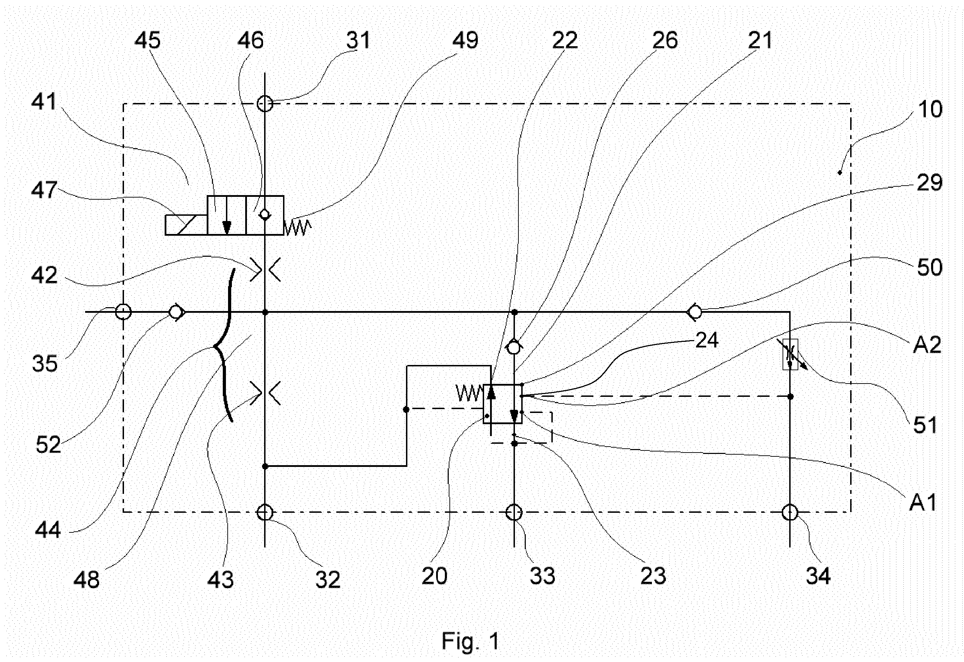

Wie bereits vorstehend erörtert, gibt es verschiedene Möglichkeiten, die Lehre der vorliegenden Erfindung in vorteilhafter Weise auszugestalten und weiterzubilden. Hierzu wird einerseits auf die dem Anspruch 1 nachgeordneten Ansprüche verwiesen, andererseits werden weitere Ausgestaltungen, Merkmale und Vorteile der vorliegenden Erfindung nachstehend unter anderem anhand der durch Fig. 1 bis Fig. 3 veranschaulichten Ausführungsbeispiele näher erläutert.

Es zeigt:

Fig. 1 in schematischer Ansicht ein Ausführungsbeispiel mit einer eine Druckregeleinrichtung aufweisenden Hydraulikschaltung gemäß der vorliegenden Erfindung;

Fig. 2 in schematischer Ansicht ein erstes Ausführungsbeispiel für ein Druckregelventil gemäß der vorliegenden Erfindung, das Teil der Hydraulikschaltung aus Fig. 1 sein kann; und

Fig. 3 in schematischer Ansicht ein zweites Ausführungsbeispiel für ein Druckregelventil gemäß der vorliegenden Erfindung, das Teil der Hydraulikschaltung aus Fig. 1 sein kann.

Gleiche oder ähnliche Ausgestaltungen, Elemente oder Merkmale sind in Fig. 1 bis Fig. 3 mit identischen Bezugszeichen versehen

**Bester Weg zur Ausführung der vorliegenden Erfindung**

Die Hydraulikschaltung 10 gemäß Fig. 1 weist grundsätzlich mehrere Anschlüsse 31, 32, 33 und ein hydraulisches Druckregelventil 20 zur Regelung, insbesondere zur Minderung, des Drucks an einem Regeldruckanschluss 33 mit mindestens drei Druckkammern 21, 22, 23 auf, die jeweils direkt oder über weitere Elemente der Hydraulikschaltung 10 mit einem der Anschlüsse der Hydraulikschaltung 10 verbunden sind.

Hierbei ist

- die erste, als Hochdruckkammer ausgebildete Druckkammer 21 des Druckregelventils 20 über einen Hochdruckanschluss 31 der Hydraulikschaltung 10 an eine Hochdruckquelle,
- die zweite, als Niederdruckkammer ausgebildete Druckkammer 22 des Druckregelventils 20 über einen Niederdruckanschluss 32 der Hydraulikschaltung 10 an eine Niederdruckquelle und
- die dritte, als Regeldruckkammer ausgebildete Druckkammer 23 des Druckregelventils 20 über den Verbraucherdruckanschluss oder Regeldruckanschluss 33 der Hydraulikschaltung 10 an einen Regeldruckanschluss

angeschlossen.

Der Hochdruckanschluss 31 ist an den Druckanschluss einer L[oad-]S[ensing]-Pumpe oder eines L[oad-]S[ensing]-fähigen Wegeventilblocks angeschlossen. Der Niederdruckanschluss 32 ist an einen Tank angeschlossen. Der Regeldruckanschluss 33 ist an einen der Druckanschlüsse eines Zylinders angeschlossen.

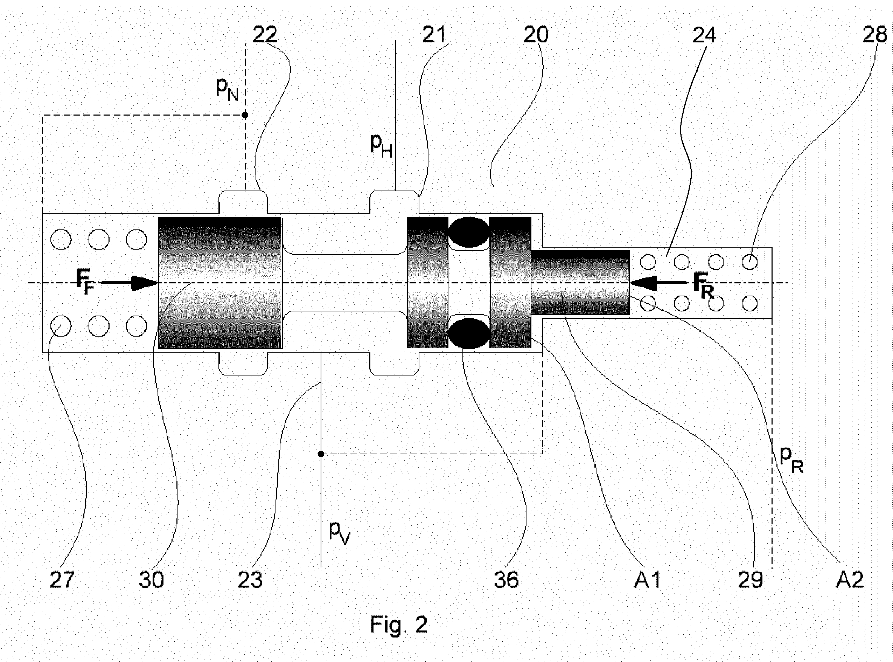

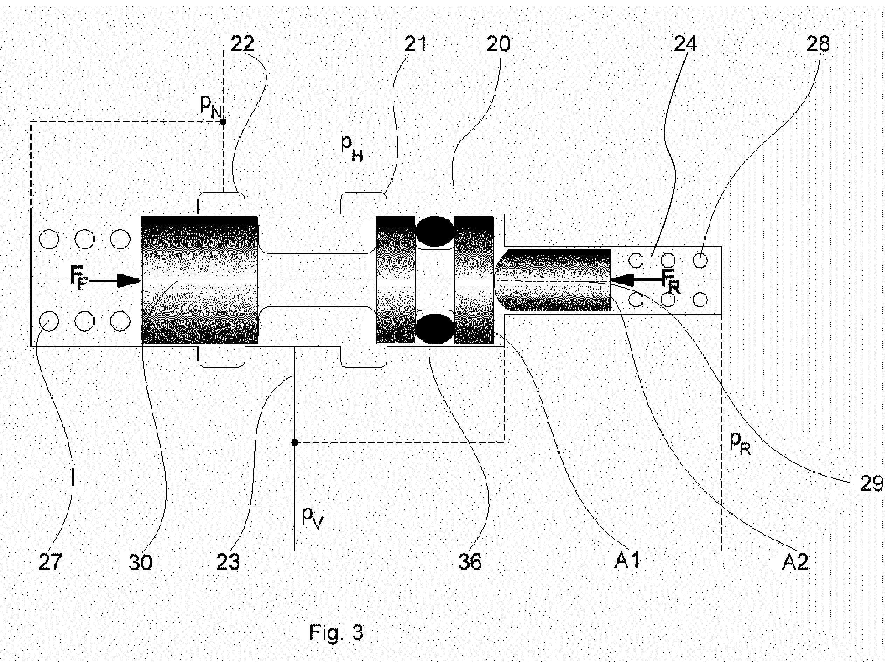

Das Druckregelventil 20 (vgl. Fig. 2 bzw. Fig. 3) weist ein bewegliches Stellglied 30, dessen Stirnflächen mit Druck beaufschlagt werden können, und eine Druckfeder 27 auf, die sich am Stellglied 30 abstützt und gegen die Druckkraft aus dem Druck $p_v$ am Regeldruckanschluss 33 wirkt.

An einer der Stirnflächen des Stellglieds 30 ist eine Einrichtung 29 vorgesehen, die mit dem an einem Referenzdruckanschluss 34 der Hydraulikschaltung 10 herrschenden Druck beaufschlagt wird, wobei die aus dieser Druckbeaufschlagung resultierende Druckkraft auf das Stellglied 30 übertragen wird, gleich- oder gegengerichtet zur auf das Stellglied 30 wirkenden Kraft, die sich aus der Druckbeaufschlagung $p_v$ am Regeldruckanschluss 33 ergibt.

Im Ausführungsbeispiel gemäß Fig. 2 umfasst die Einrichtung 29 eine Teilfläche $A_2$ der einen der Stirnflächen des Stellglieds 30. Diese Teilfläche $A_2$ ist von der anderen Teilfläche $A_1$ hydraulisch getrennt, das heißt es besteht keine offensichtliche Verbindung zwischen den beiden Teilflächen $A_1$, $A_2$.

Im Unterschied hierzu ist die Einrichtung 29 im Ausführungsbeispiel gemäß Fig. 3 als separates Stellelement ausgeführt, das sich auf einer der Stirnflächen des Stellglieds 30 unter Einwirkung der Druckkräfte abstützen kann.

Die einzelnen Druckkammern 21, 22, 23, 24 des Druckregelventils 20 sind voneinander schieberdichtend, insbesondere mit geringer Leckage, jedoch reibungsarm, getrennt. Hierzu können die einzelnen Druckkammern 21, 22, 23, 24 des Druckregelventils 20 voneinander mittels mindestens eines unter Druckeinwirkung verformbaren Dichtelements 36 getrennt sein. Das Dichtelement 36 kann zum Beispiel aus Kautschuk, aus Polyurethan oder aus Polytetrafluorethylen gebildet sein.

Zwischen dem Hochdruckanschluss 31 der Hydraulikschaltung 10 und dem Niederdruckanschluss 32 der Hydraulikschaltung 10 ist eine Teilschaltung 44 in Form einer Druckkaskade oder hydraulischen Kaskade aus zwei in Serie geschalteten Blenden 42, 43 angeordnet. Hierbei kann mindestens eine der Blenden 42, 43 druckkompensiert sein.

Auf der dem Hochdruckanschluss 31 unter dem Niederdruckanschluss 32 zugewandten Seite der Teilschaltung 44 kann ein Wegeventil 41 angeordnet sein. Das Wegeventil 41 weist mindestens zwei Schaltzustände 46, 45 auf, wobei die Teilschaltung 44

- im ersten oder geschlossenen Schaltzustand 46 des Wegeventils 41 vom Hochdruckanschluss 31 gesperrt wird und
- im zweiten oder offenen Schaltzustand 45 des Wegeventils 41 mit dem Hochdruckanschluss 31 verbunden ist.

Gemäß einem alternativen Ausführungsbeispiel kann die Teilschaltung 44 über mindestens ein schaltbares Wegeventil mit dem Niederdruckanschluss 32 verbunden werden.

Unabhängig von seiner Lage kann das Wegeventil 41 als Magnetventil ausgeführt sein, das

- in unbestromtem Zustand 46 durch die Kraft seiner Feder 49 in Sperrstellung und
- in bestromtem Zustand 45 durch die gegen die Kraft seiner Feder 49 wirkende Kraft eines Magneten 47 in Öffnungsstellung überführt wird.

Solange sich das Wegeventil 41 im geschlossenen oder Sperr-Zustand 46 befindet, baut sich der Druck im Abschnitt 48 der Teilschaltung 44 über die zweite, dem Niederdruckanschluss 32 zugeordnete Blende 43 zum Niederdruckanschluss 32, insbesondere zum Tank, hin ab. Somit wird in der Hochdruckkammer 21 kein Druck aufgebaut; der Druck $p_v$ am Regeldruckanschluss 33 ist über ein als Rückschlagventil ausgebildetes Ventil 26 eingesperrt.

Wenn das Wegeventil 41 in den offenen Zustand 45 überführt ist, wird der den Volumenstrom abbildende Druckabfall an der Strommessblende 42 direkt oder über weitere Elemente der Hydraulikschaltung 10 an einen Druckmeldeanschluss 35 gemeldet, der an den L[oad-]S[ensing]-Anschluss der L[oad-]S[ensing]-Pumpe oder des L[oad-]S[ensing]-fähigen Wegeventilblocks angeschlossen ist.

Auf diesem Wege kann der volumenstrombildende Druckabfall an der ersten Blende 42 der Teilschaltung 44 in offener Stellung 45 des Wegeventils 41 über den Druckmeldeanschluss 35 an die Druckmeldeleitung oder L[oad-]S[ensing]-Leitung der Hochdruckquelle gemeldet werden.

In geschlossener Stellung 46 des Wegeventils 41 baut sich der Druck am Druckmeldeanschluss 35 der Hydraulikschaltung 10 über die zweite Blende 43 der Teilschaltung 44 zum Tank ab.

Die erste, als Hochdruckkammer ausgebildete Druckkammer 21 des Druckregelventils 20 ist an den zwischen den beiden Blenden 42, 43 liegenden Abschnitt 48 der Teilschaltung 44 angeschlossen.

Auch der Referenzdruckanschluss 34 der Hydraulikschaltung 10 ist an die Teilschaltung 44 angeschlossen. Somit wird das Öl in offenem Zustand des Wegeventils 41 an den Referenzanschluss 34 geleitet und gleichzeitig dem Druckregelventil 20 angeboten.

Zwischen dem zwischen den beiden Blenden 42, 43 liegenden Abschnitt 48 der Teilschaltung 44 und dem Referenzdruckanschluss 34 der Hydraulikschaltung 10 ist mindestens ein Stromregelventil 51 angeordnet. Folglich wird der Volumenstrom hinter der ersten Blende 42 aufgeteilt in die Volumenströme zur Referenzschaltung 34, über die zweite Blende 43 und zum Hochdruckanschluss des Druckventils 20.

Hierbei resultiert der Druck am Abschnitt 48 der Teilschaltung 44 im Wesentlichen aus dem Druckabfall des Teilvolumenstroms an der zweiten Blende 43.

Durch entsprechende Dimensionierung der ersten Blende 42, der zweite Blende 43 und des Stromregelventils 51 kann der Druck am Abschnitt 48 der Teilschaltung 44 entsprechend den Erfordernissen eingestellt werden. Hierzu kann zum Beispiel die zweite Blende 43 wesentlich kleiner als die erste Blende 42 dimensioniert sein.

So wird der Druck $p_V$ am Regeldruckanschluss 33 verkleinert, wenn der Druck $p_R$ am Referenzanschluss ansteigt. Entsprechend wird der Druck $p_V$ am Regeldruckanschluss 33 vergrößert, wenn der Druck $p_R$ am Referenzdruckanschluss 34 verringert wird. Solange am Referenzdruckanschluss 34 kein Druck anliegt, stellt sich der Druck $p_V$ am Regeldruckanschluss 33 im Wesentlichen entsprechend der Kraft der Feder 27 ein.

Die Hydraulikschaltung 10 gemäß Fig. 1 eignet sich erfindungsgemäß zum Einsatz in einem Federungssystem mit einer vordefinierten Abhängigkeit des Drucks am Regeldruckanschluss 33 vom Druck am Referenzdruckanschluss 34, insbesondere mit einem linearen Zusammenhang zwischen dem Druck $p_V$ am Regeldruckanschluss 33 und dem Druck $p_R$ am Referenzdruckanschluss 34:

Hierbei gilt (vgl. Fig. 2 und Fig. 3):

$$F_F + p_N (A_1 + A_2) = p_V \cdot A_1 + p_R \cdot A_2 + F_R$$

Mit $p_N \cong 0$ und mit $F_R \gg A_2 \cdot p_V$ folgt daraus:

$$p_V = \frac{F_F - F_R}{A_1} - \frac{A_2}{A_1} \cdot p_R$$

Es ergibt sich also ein linearer Zusammenhang zwischen dem Druck $p_V$ am Regeldruckanschluss 33 und dem Druck $p_R$ am Referenzdruckanschluss 34.

**Bezugszeichenliste**

| | |
|---|---|
| 10 | Hydraulikschaltung |
| 20 | Druckregelventil, insbesondere Druckbegrenzungsventil oder Druckminderungsventil |
| 21 | erste Druckkammer, insbesondere Hochdruckkammer, des Druckregelventils 20 |
| 22 | zweite Druckkammer, insbesondere Niederdruckkammer, des Druckregelventils 20 |
| 23 | dritte Druckkammer, insbesondere Regeldruckkammer, des Druckregelventils 20 |
| 24 | vierte Kammer, insbesondere Referenzdruckkammer, des Druckregelventils 20 |
| 26 | Ventil, insbesondere Rückschlagventil |
| 27 | Druckfeder, insbesondere Offset-Feder |
| 28 | Feder an Einrichtung 29 |
| 29 | Einrichtung |
| 30 | Stellglied |
| 31 | Hochdruckanschluss, insbesondere einer Pumpe oder einem Wegeventilblock zugeordnet, zum Beispiel einer L[oad-]S[ensing]-Pumpe oder einem L[oad-]S[ensing]-fähigen Wegeventilblock zugeordnet |
| 32 | Niederdruckanschluss, insbesondere einem Tank zugeordnet |
| 33 | Regeldruckanschluss, insbesondere einem Zylinder oder einer Zylinderkammer zugeordnet |
| 34 | Referenzdruckanschluss |
| 35 | Druckmeldeanschluss |
| 36 | Dichtelement |
| 41 | Wegeventil, insbesondere Magnetventil |
| 42 | erste Blende, insbesondere erste Strommessblende, der Teilschaltung 44 |
| 43 | zweite Blende, insbesondere zweite Strommessblende, der Teilschaltung 44 |
| 44 | Teilschaltung, insbesondere Druckkaskade oder hydraulische Kaskade, zum Beispiel Serienschaltung der ersten Blende 42 und der zweiten Blende 43 |
| 45 | zweiter und/oder offener Zustand, insbesondere zweiter und/oder bestromter und/oder offener |

Schaltzustand, des Wegeventils 41

46 erster und/oder geschlossener Zustand, insbesondere erster und/oder unbestromter und/oder geschlossener Schaltzustand, des Wegeventils 41

47 Magnet

48 Abschnitt der Teilschaltung 44

49 Feder, insbesondere Rückstellfeder, des Wegeventils 41

50 Rückschlagventil

51 Stromregelventil

52 Rückschlagventil

$A_1$ erste Teilfläche

$A_2$ zweite Teilfläche

$F_F$ Federkraft der Druckfeder 27

$F_R$ Federkraft der Feder 28 an Einrichtung 29

$p_H$ Druck am Hochdruckanschluss 31

$p_N$ Druck am Niederdruckanschluss 32

$p_R$ Druck an Feder 28 an Einrichtung 29

$p_V$ Druck am Regeldruckanschluss 33

**Patentansprüche**

**1.** Hydraulikschaltung (10) mit einem zur Regelung, insbesondere zur Minderung, des Drucks an einem Regeldruckanschluss (33) vorgesehenen hydraulischen Druckregelventil (20), aufweisend

- mindestens ein bewegliches Stellglied (30), dessen Stirnflächen mit Druck beaufschlagbar sind,
- mindestens eine Druckfeder (27), die sich am Stellglied (30) abstützt und gegen die die Druckkraft aus dem Druck ($p_V$) am Regeldruckanschluss (33) wirkt,
- eine über einen Hochdruckanschluss (31) der Hydraulikschaltung (10) an eine Hochdruckquelle angeschlossene erste Druckkammer (21),
- eine über einen Niederdruckanschluss (32) der Hydraulikschaltung (10) an eine Niederdruckquelle angeschlossene zweite Druckkammer (22) und
- eine über den Regeldruckanschluss (33) der Hydraulikschaltung (10) an einen Verbraucher angeschlossene dritte Druckkammer (23),

**dadurch gekennzeichnet,**
**dass** an einer der Stirnflächen des Stellglieds (30) eine Einrichtung (29) vorgesehen ist, die mit dem an mindestens einem Referenzdruckanschluss (34) der Hydraulikschaltung (10) herrschenden Druck beaufschlagbar ist und dass die mindestens eine aus dieser Druckbeaufschlagung resultierende Druckkraft auf das Stellglied (30) übertragbar ist und gleich- oder gegengerichtet zu der auf das Stellglied (30) wirkenden, sich aus der aus der Druckbeaufschlagung am Regeldruckanschluss (33) ergebenden Kraft ist.

**2.** Hydraulikschaltung gemäß Anspruch 1, **dadurch gekennzeichnet,**

- **dass** die Hochdruckquelle als mindestens eine Pumpe oder als mindestens ein Wegeventilblock ausgebildet ist und/oder
- **dass** die Niederdruckquelle als mindestens ein Tank ausgebildet ist und/oder
- **dass** der Verbraucher als mindestens ein Zylinder oder als mindestens eine Zylinderkammer ausgebildet ist.

**3.** Hydraulikschaltung gemäß Anspruch 1 oder 2, **dadurch gekennzeichnet,**

- **dass** die erste Druckkammer (21) als Hochdruckkammer ausgebildet ist und/oder
- **dass** die zweite Druckkammer (22) als Niederdruckkammer ausgebildet ist und/oder
- **dass** die dritte Druckkammer (23) als Regeldruckkammer ausgebildet ist.

**4.** Hydraulikschaltung gemäß mindestens einem der Ansprüche 1 bis 3, **gekennzeichnet durch** eine über einen Referenzdruckanschluss (34) der Hydraulikschaltung (10) an eine Referenzdruckquelle angeschlossene vierte Druckkammer (24), insbesondere Referenzdruckkammer, des Druckregelventils (20).

**5.** Hydraulikschaltung gemäß mindestens einem der Ansprüche 1 bis 4, **dadurch gekennzeichnet, dass** die Einrichtung (29) eine Teilfläche ($A_2$) der einen der Stirnflächen des Stellglieds (30) des Druckregelventils (20) umfasst, die von der anderen Teilfläche ($A_1$) hydraulisch getrennt ist.

**6.** Hydraulikschaltung gemäß mindestens einem der Ansprüche 1 bis 5, **dadurch gekennzeichnet, dass** die Einrichtung (29) als separates Stellelement ausgeführt ist, das sich auf einer der Stirnflächen des Stellglieds (30) unter Einwirkung der Kraft aus dem Druck am Referenzdruckanschluss (34) neben der Kraft ($F_R$) einer der Einrichtung (29) zugeordneten Feder (28) abstützt.

**7.** Hydraulikschaltung gemäß mindestens einem der Ansprüche 1 bis 6, **dadurch gekennzeichnet, dass** die einzelnen Druckkammern (21, 22, 23) voneinander schieberdichtend getrennt sind.

**8.** Hydraulikschaltung gemäß mindestens einem der Ansprüche 1 bis 7, **dadurch gekennzeichnet, dass** die einzelnen Druckkammern (21, 22, 23) mittels mindestens eines unter Druckeinwirkung verformbaren Dichtelements (36), zum Beispiel aus Kautschuk, aus Polyurethan oder aus Polytetrafluorethylen, getrennt sind.

9. Hydraulikschaltung gemäß mindestens einem der Ansprüche 1 bis 8, **dadurch gekennzeichnet, dass** zwischen dem Hochdruckanschluss (31) und dem Niederdruckanschluss (32) eine, insbesondere als Druckkaskade oder als hydraulische Kaskade ausgebildete, mindestens zwei, insbesondere druckkompensierte, Blenden (42, 43) aufweisende Teilschaltung (44) angeordnet ist.

10. Hydraulikschaltung gemäß Anspruch 9, **dadurch gekennzeichnet, dass** auf der dem Hochdruckanschluss (31), insbesondere unter dem Niederdruckanschluss (32), zugewandten Seite der Teilschaltung (44) ein Wegeventil (41), insbesondere Magnetventil, angeordnet ist.

11. Hydraulikschaltung gemäß Anspruch 10, **dadurch gekennzeichnet, dass** das Wegeventil (41) mindestens zwei Schaltzustände (46, 45) aufweist, wobei die Teilschaltung (44)

    - im ersten oder geschlossenen Schaltzustand (46) des Wegeventils (41) vom Hochdruckanschluss (31) getrennt ist und
    - im zweiten oder offenen Schaltzustand (45) des Wegeventils (41) mit dem Hochdruckanschluss (31) verbunden ist.

12. Hydraulikschaltung gemäß Anspruch 11, **dadurch gekennzeichnet, dass** das Wegeventil (41)

    - im ersten, insbesondere unbestromten, Schaltzustand (46) durch die Kraft einer dem Wegeventil (41) zugeordneten Feder (49) in eine Sperrstellung überführt wird und
    - im zweiten, insbesondere bestromten, Schaltzustand (45) durch die gegen die Kraft der dem Wegeventil (41) zugeordneten Feder (49) wirkende Kraft eines Magneten (47) in eine offene Stellung überführt wird.

13. Hydraulikschaltung gemäß mindestens einem der Ansprüche 9 bis 12, **dadurch gekennzeichnet, dass**

    - die erste Druckkammer (21) und/oder
    - ein Referenzdruckanschluss (34), insbesondere über mindestens ein Rückschlagventil (50) und/oder über mindestens ein Stromregelventil (51), und/oder
    - ein Druckmeldeanschluss (35), insbesondere über mindestens ein Rückschlagventil (52),

    an einen zwischen den Blenden (42, 43) liegenden Abschnitt (48) der Teilschaltung (44) angeschlossen ist.

14. Verwendung mindestens einer Hydraulikschaltung (10) gemäß mindestens einem der Ansprüche 1 bis 13 in einem L[oad-]S[ensing]-System oder Lastdruck-Melde-System.

15. Verwendung mindestens einer Hydraulikschaltung (10) gemäß mindestens einem der Ansprüche 1 bis 13 in einem Federungssystem für eine der Achsen, insbesondere für die Vorderachse, eines Kraftfahrzeugs, zum Beispiel eines landwirtschaftlichen Schleppers.

## Claims

1. Hydraulic circuit (10) having a hydraulic pressure-control valve (20) provided for controlling, especially for reducing, the pressure at a control pressure port (33), having

    - at least one movable actuator (30), the end faces of which are subjectable to pressure,
    - at least one compression spring (27) which is supported on the actuator (30) and against which the pressure force arising from the pressure ($p_v$) at the control pressure port (33) acts,
    - a first pressure chamber (21) connected to a high-pressure source via a high-pressure port (31) of the hydraulic circuit (10),
    - a second pressure chamber (22) connected to a low-pressure source via a low-pressure port (32) of the hydraulic circuit (10), and
    - a third pressure chamber (23) connected to a consumer via the control pressure port (33) of the hydraulic circuit (10),

    **characterised in that**
    on one of the end faces of the actuator (30) there is provided a device (29) which is subjectable to the pressure present at at least one reference pressure port (34) of the hydraulic circuit (10), and the at least one pressure force resulting from that application of pressure is transmissible to the actuator (30) and is directed in the same direction or the opposite direction to the force acting on the actuator (30) that results from the application of pressure at the control pressure port (33).

2. Hydraulic circuit according to claim 1, **characterised in that**

    - the high-pressure source is in the form of at least one pump or in the form of at least one directional valve block and/or
    - the low-pressure source is in the form of at least one tank and/or
- the consumer is in the form of at least one cylinder or in the form of at least one cylinder chamber.

3. Hydraulic circuit according to claim 1 or 2, **characterised in that**

- the first pressure chamber (21) is in the form of a high-pressure chamber and/or
- the second pressure chamber (22) is in the form of a low-pressure chamber and/or
- the third pressure chamber (23) is in the form of a control pressure chamber.

4. Hydraulic circuit according to at least one of claims 1 to 3, **characterised by** a fourth pressure chamber (24), especially a reference pressure chamber, of the pressure control valve (20), which fourth pressure chamber is connected to a reference pressure source via a reference pressure port (34) of the hydraulic circuit (10).

5. Hydraulic circuit according to at least one of claims 1 to 4, **characterised in that** the device (29) comprises a surface portion ($A_2$) of one of the end faces of the actuator (30) of the pressure control valve (20), which surface portion is hydraulically separate from the other surface portion ($A_1$).

6. Hydraulic circuit according to at least one of claims 1 to 5, **characterised in that** the device (29) is implemented as a separate actuating element which is supported on one of the end faces of the actuator (30) under the action of the force arising from the pressure at the reference pressure port (34) in addition to the force ($F_R$) of a spring (28) assigned to the device (29).

7. Hydraulic circuit according to at least one of claims 1 to 6, **characterised in that** the individual pressure chambers (21, 22, 23) are sealingly separated from one other by the movable actuator.

8. Hydraulic circuit according to at least one of claims 1 to 7, **characterised in that** the individual pressure chambers (21, 22, 23) are separated by at least one sealing element (36) which is deformable under the action of pressure, for example made of rubber, of polyurethane or of polytetrafluoroethylene.

9. Hydraulic circuit according to at least one of claims 1 to 8, **characterised in that** between the high-pressure port (31) and the low-pressure port (32) there is arranged a sub-circuit (44), especially in the form of a pressure cascade or in the form of a hydraulic cascade, having at least two, especially pressure-compensated, orifice plates (42, 43).

10. Hydraulic circuit according to claim 9, **characterised in that** on the side of the sub-circuit (44) that faces the high-pressure port (31), especially under the low-pressure port (32), there is arranged a directional valve (41), especially a solenoid valve.

11. Hydraulic circuit according to claim 10, **characterised in that** the directional valve (41) has at least two switching states (46, 45), wherein the sub-circuit (44),

- in the first or closed switching state (46) of the directional valve (41), is separated from the high-pressure port (31) and,
- in the second or open switching state (45) of the directional valve (41), is connected to the high-pressure port (31).

12. Hydraulic circuit according to claim 11, **characterised in that** the directional valve (41),

- in the first, especially non-energised, switching state (46), is transferred to a blocking position by the force of a spring (49) assigned to the directional valve (41) and,
- in the second, especially energised, switching state (45), is transferred to an open position by the force of a magnet (47) acting against the force of the spring (49) assigned to the directional valve (41).

13. Hydraulic circuit according to at least one of claims 9 to 12, **characterised in that**

- the first pressure chamber (21) and/or
- a reference pressure port (34) and/or
- a pressure-indicating port (35)

is connected to a section (48) of the sub-circuit (44) located between the orifice plates (42, 43), the reference pressure port being connected thereto especially via at least one non-return valve (50) and/or via at least one flow control valve (51), and the pressure-indicating port being connected thereto especially via at least one non-return valve (52).

14. Use of at least one hydraulic circuit (10) according to at least one of claims 1 to 13 in a L(oad) S(ensing) System or load-indicating system.

15. Use of at least one hydraulic circuit (10) according to at least one of claims 1 to 13 in a suspension system for one of the axles, especially for the front axle, of a motor vehicle, for example an agricultural tractor.

## Revendications

1. Circuit hydraulique (10) comprenant une soupape de régulation de pression hydraulique (20) prévue pour réguler, en particulier pour réduire, la pression à un raccord de pression de régulation (33), présentant

   - au moins un actionneur mobile (30) dont les faces frontales peuvent être soumises à une pression,
   - au moins un ressort de compression (27) qui s'appuie sur l'actionneur (30) et contre lequel agit la force de pression de la pression ($p_v$) au raccord de pression de régulation (33),
   - une première chambre de pression (21) reliée à une source de haute pression par l'intermédiaire d'un raccord de haute pression (31) du circuit hydraulique (10),
   - une deuxième chambre de pression (22) reliée à une source de basse pression par l'intermédiaire d'un raccord de basse pression (32) du circuit hydraulique (10) et
   - une troisième chambre de pression (23) reliée à un consommateur par l'intermédiaire du raccord de pression de régulation (33) du circuit hydraulique (10),

   **caractérisé en ce**
   **qu'**un dispositif (29) est prévu sur l'une des faces frontales de l'actionneur (30), auquel peut être appliquée la pression régnant à au moins un raccord de pression de référence (34) du circuit hydraulique (10), et que ladite au moins une force de pression résultant de cette application de pression peut être transmise à l'actionneur (30) et est dirigée dans le même sens ou en sens contraire de la force agissant sur l'actionneur (30) et résultant de l'application de pression au raccord de pression de régulation (33).

2. Circuit hydraulique selon la revendication 1, **caractérisé en ce**

   - **que** la source de haute pression est réalisée sous la forme d'au moins une pompe ou d'au moins un bloc distributeur et/ou
   - **que** la source de basse pression est réalisée sous la forme d'au moins un réservoir et/ou
   - **que** le consommateur est réalisé sous la forme d'au moins un vérin ou d'au moins une chambre de vérin.

3. Circuit hydraulique selon la revendication 1 ou 2, **caractérisé en ce**

   - **que** la première chambre de pression (21) est réalisée sous la forme d'une chambre à haute pression et/ou

   - **que** la deuxième chambre de pression (22) est réalisée sous la forme d'une chambre à basse pression et/ou
   - **que** la troisième chambre de pression (23) est réalisée sous la forme d'une chambre de pression de régulation.

4. Circuit hydraulique selon au moins l'une des revendications 1 à 3, **caractérisé par** une quatrième chambre de pression (24), en particulier une chambre de pression de référence, de la soupape de régulation de pression (20), reliée à une source de pression de référence par l'intermédiaire d'un raccord de pression de référence (34) du circuit hydraulique (10).

5. Circuit hydraulique selon au moins l'une des revendications 1 à 4, **caractérisé en ce que** le dispositif (29) comprend une surface partielle ($A_2$) d'une des faces frontales de l'actionneur (30) de la soupape de régulation de pression (20) qui est séparée hydrauliquement de l'autre surface partielle ($A_1$).

6. Circuit hydraulique selon au moins l'une des revendications 1 à 5, **caractérisé en ce que** le dispositif (29) est réalisé sous la forme d'un élément d'actionnement séparé qui s'appuie sur l'une des faces frontales de l'actionneur (30) sous l'action de la force de la pression au raccord de pression de référence (34) en plus de la force ($F_R$) d'un ressort (28) associé au dispositif (29).

7. Circuit hydraulique selon au moins l'une des revendications 1 à 6, **caractérisé en ce que** les différentes chambres de pression (21, 22, 23) sont séparées l'une de l'autre de manière étanche par glissière.

8. Circuit hydraulique selon au moins l'une des revendications 1 à 7, **caractérisé en ce que** les différentes chambres de pression (21, 22, 23) sont séparées au moyen d'au moins un élément d'étanchéité (36) déformable sous l'action de la pression, par exemple en caoutchouc, en polyuréthane ou en polytétrafluoroéthylène.

9. Circuit hydraulique selon au moins l'une des revendications 1 à 8, **caractérisé en ce qu'**entre le raccord de haute pression (31) et le raccord de basse pression (32) est disposé un circuit partiel (44) qui présente au moins deux diaphragmes (42, 43), en particulier compensés en pression, et qui est réalisé en particulier sous la forme d'une cascade de pression ou d'une cascade hydraulique.

10. Circuit hydraulique selon la revendication 9, **caractérisé en ce qu'**un distributeur (41), en particulier une électrovanne, est disposé du côté du circuit partiel (44) tourné vers le raccord de haute pression (31), en particulier sous le raccord de basse pression (32).

11. Circuit hydraulique selon la revendication 10, **caractérisé en ce que** le distributeur (41) présente au moins deux états de commutation (46, 45), dans lequel le circuit partiel (44)

- est séparé du raccord de haute pression (31) dans le premier état de commutation ou l'état de commutation fermé (46) du distributeur (41) et
- est relié au raccord de haute pression (31) dans le deuxième état de commutation ou l'état de commutation ouvert (45) du distributeur (41).

12. Circuit hydraulique selon la revendication 11, **caractérisé en ce que**

- dans le premier état de commutation (46), en particulier non alimenté, le distributeur (41) est transféré dans une position fermée par la force d'un ressort (49) associé au distributeur (41) et,
- dans le deuxième état de commutation (45), en particulier alimenté, transféré dans une position ouverte par la force d'un aimant (47) agissant contre la force du ressort (49) associé au distributeur (41).

13. Circuit hydraulique selon au moins l'une des revendications 9 à 12, **caractérisé en ce que**

- la première chambre de pression (21) et/ou
- un raccord de pression de référence (34), en particulier par l'intermédiaire d'au moins un clapet anti-retour (50) et/ou d'au moins une soupape de régulation de débit (51), et/ou
- un raccord de signalisation de pression (35), en particulier par l'intermédiaire d'au moins un clapet anti-retour (52), sont reliés à une section (48) du circuit partiel (44) située entre les diaphragmes (42, 43).

14. Utilisation d'au moins un circuit hydraulique (10) selon au moins l'une des revendications 1 à 13 dans un système L[oad-]S[ensing] ou système de détection de charge.

15. Utilisation d'au moins un circuit hydraulique (10) selon au moins l'une des revendications 1 à 13 dans un système de suspension pour l'un des essieux, en particulier pour l'essieu avant, d'un véhicule automobile, par exemple d'un tracteur agricole.

Fig. 1

Fig. 2

Fig. 3

EP 2 875 975 B1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 10107644 A1
- DE 19719076 A1
- DE 1550589 A1
- GB 889529 A